(19) Europäisches Patentamt
European Patent Office
Office européen des brevets

(11) **EP 4 641 281 A1**

(12) **EUROPEAN PATENT APPLICATION**
published in accordance with Art. 153(4) EPC

(43) Date of publication:
29.10.2025 Bulletin 2025/44

(21) Application number: 23907006.3

(22) Date of filing: 19.12.2023

(51) International Patent Classification (IPC):
*G02B 13/14* (2006.01)      *C03C 3/32* (2006.01)
*G02B 1/02* (2006.01)       *G02B 13/00* (2006.01)
*G02B 13/02* (2006.01)

(52) Cooperative Patent Classification (CPC):
C03C 3/32; G02B 1/02; G02B 13/00; G02B 13/02;
G02B 13/14

(86) International application number:
PCT/JP2023/045406

(87) International publication number:
WO 2024/135646 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.12.2022 JP 2022207234

(71) Applicant: Nippon Electric Glass Co., Ltd.
Otsu-shi, Shiga 520-8639 (JP)

(72) Inventors:
• IWANAGA, Motoshi
  Otsu-shi, Shiga 520-8639 (JP)
• MATSUSHITA, Yoshimasa
  Otsu-shi, Shiga 520-8639 (JP)
• SATO, Fumio
  Otsu-shi, Shiga 520-8639 (JP)
• HORI, Nobuo
  Higashimatsuyama-shi, Saitama 355-0003 (JP)

(74) Representative: Vidon Brevets & Stratégie
16B, rue de Jouanet
35700 Rennes (FR)

(54) **INFRARED IMAGING LENS**

(57)    Provided is a telephoto lens which is excellent in resolution. An infrared imaging lens (1) includes a first group (G1) consisting of a plurality of lenses and a second group (G2) consisting of a plurality of lenses, the lenses being each made of chalcogenide glass having a refractive index, measured at a wavelength of 10 μm, of 2.5 to 4.0, the first group and the second group each including the plurality of lenses each made of the chalcogenide glass having a different Abbe number, the infrared imaging lens having a total system focal length not less than five times larger than a diameter of an image circle of the infrared imaging lens.

FIG. 1

EP 4 641 281 A1

## Description

Technical Field

The present invention relates to an infrared imaging lens.

Background Art

Infrared cameras for capturing an image of a subject with use of infrared radiation in far-infrared regions, in particular, a 10 pm-band wavelength region which is suitable for biodetection, are applied to surveillance cameras, security cameras, in-vehicle night vision systems, and the like. Specifically, these infrared cameras can be applied to various fields, such as intruder surveillance in facilities and the like, poacher surveillance, traffic monitoring, road-obstacle monitoring, forest-fire origin detection, and maritime surveillance, and are expected to increase in demand. An infrared imaging lens which is applied to such an infrared camera has been known.

Citation List

[Patent Literature]

[Patent Literature 1]
Japanese Patent Application Publication Tokukai No. 2019-8271

Summary of Invention

Technical Problem

Applications as typified by night-time remote surveillance require a so-called telephoto lens, which has a relatively long focal length. Depending on an installation area, for example, an imaging lens having a very long focal length such that a half angle of view is not more than approximately 5° is needed. There is a need to achieve, as such a telephoto lens, in particular, an infrared imaging lens which has excellent resolution suitable for a compact image sensor having a pixel pitch substantially equivalent to a wavelength, which covers a wide wavelength band, and which is so inexpensive as to be usable as a commercial product.

An aspect of the present invention has been made by focusing on the above problem. It is an object of an aspect of the present invention to achieve an infrared imaging lens that is a telephoto lens which has excellent resolution suitable for an image sensor having a pixel pitch substantially equivalent to the wavelength and which is applicable to a commercial use.

Solution to Problem

In order to solve the foregoing problem, an aspect of the present disclosure is an infrared imaging lens used in an infrared region including at least one wavelength in a range of 8 $\mu$m to 14 $\mu$m, the infrared imaging lens comprising a first group consisting of a plurality of lenses and a second group consisting of a plurality of lenses, the first group and the second group being disposed in order from an object side to an image plane side, the plurality of lenses constituting the first group and the plurality of lenses constituting the second group being each made of chalcogenide glass having a refractive index, measured at a wavelength of 10 $\mu$m, of 2.5 to 4.0, the first group and the second group each including the plurality of lenses each made of the chalcogenide glass that has a different Abbe number defined in a predetermined wavelength band in a range of 8 $\mu$m to 14 $\mu$m, the infrared imaging lens having a total system focal length not less than five times larger than a diameter of an image circle of the infrared imaging lens.

In addition, in order to solve the foregoing problem, another aspect of the present disclosure is an infrared imaging lens used in an infrared region including at least one wavelength in a range of 8 $\mu$m to 14 $\mu$m, the infrared imaging lens comprising a first group consisting of a plurality of lenses and a second group consisting of a plurality of lenses, the first group and the second group being disposed in order from an object side to an image plane side, the plurality of lenses constituting the first group and the plurality of lenses constituting the second group being each made of chalcogenide glass having a refractive index, measured at a wavelength of 10 $\mu$m, of 2.5 to 4.0, the first group and the second group each including the plurality of lenses each made of the chalcogenide glass that has a different Abbe number defined in a predetermined wavelength band in a range of 8 $\mu$m to 14 $\mu$m, the infrared imaging lens having a half angle of view of not more than 5°.

Advantageous Effects of Invention

According to the above aspects of the present invention, it is possible to achieve an infrared imaging lens that is a telephoto lens which has excellent resolution suitable for an image sensor having a pixel pitch substantially equivalent to the wavelength and which is applicable to a commercial use.

Brief Description of Drawings

Fig. 1 is a cross-sectional view illustrating a configuration of main parts of an infrared imaging lens in accordance with an embodiment of the present invention.

Fig. 2 is an aberration diagram showing spherical aberration, astigmatism, and distortion of an infrared imaging lens in accordance with Numerical Example 1 of the present invention.

Fig. 3 is an aberration diagram illustrating comatic aberration of the infrared imaging lens in accordance with Numerical Example 1 of the present invention.

Fig. 4 is a graph showing image height dependence of a relative illuminance of the infrared imaging lens in accordance with Numerical Example 1 of the present invention.

Fig. 5 is a graph showing spatial frequency dependence of an MTF, measured in a wavelength range of 8 $\mu$m to 14 $\mu$m, of the infrared imaging lens in accordance with Numerical Example 1 of the present invention.

Fig. 6 is a graph showing spatial frequency dependence of the MTF, measured in a wavelength range of 8 $\mu$m to 14 $\mu$m, of the infrared imaging lens in accordance with Numerical Example 1 of the present invention.

Fig. 7 is a graph showing focal shift dependence of the MTF of the infrared imaging lens in accordance with Numerical Example 1 of the present invention.

Fig. 8 is a graph showing an impact caused by a temperature on focal shift dependence of the MTF of the infrared imaging lens in accordance with Numerical Example 1 of the present invention.

Description of Embodiments

[Embodiments]

<Overview of infrared imaging lens>

An infrared imaging lens 1 in accordance with an embodiment is a lens system which covers an infrared region including at least one wavelength in a range of 8 $\mu$m to 14 $\mu$m and which forms an image of a subject on an image plane S of an image sensor or the like. Such a wavelength region is a wavelength region also referred to as a far-infrared wavelength region as well.

The infrared imaging lens 1 in accordance with the present embodiment is intended for a telephoto lens, such as one having a total system focal length fL not less than five times larger than a diameter $\varphi$s of an image circle of the infrared imaging lens 1. That is, the infrared imaging lens 1 in accordance with the present embodiment is intended for an infrared imaging lens that makes it possible to achieve an imaging device that allows, by including the infrared imaging lens 1, a distant object to be enlarged and observed. Note that the diameter of the image circle is designed to have a size substantially equal to or somewhat larger than a diagonal length of the image sensor to be used. Specifically, the diameter of the image circle is designed to be 1 time to 1.1 times larger than the diagonal length of the image sensor to be used.

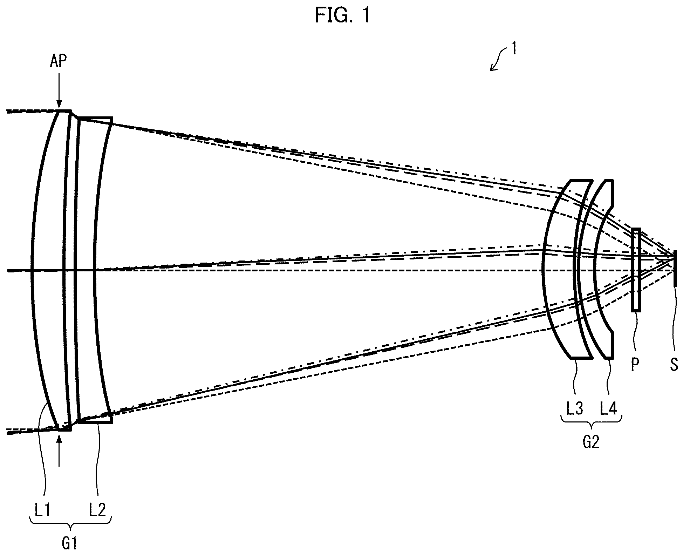

Fig. 1 is a cross-sectional view illustrating a configuration of main parts of the infrared imaging lens 1 and taken along an optical axis. Fig. 1 illustrates a configuration of the infrared imaging lens 1 focused on an object at an infinite distance and light beams. The infrared imaging lens 1 is constituted by disposing, in order from an object side to an image plane S side, the first group G1 which is a lens group consisting of a plurality of lenses and a second group G2 which is a lens group consisting of a plurality of lenses.

The lenses constituting the first group G1 and the lenses constituting the second group G2 are each made of chalcogenide glass having a refractive index N10, measured at a wavelength of 10 $\mu$m, of 2.5 to 4.0. Here, the reference sign N10 indicates that it is, in particular, a refractive index measured at a wavelength of 10 $\mu$m. The first group G1 and the second group G2 each include lenses each made of the chalcogenide glass having a different Abbe number defined in a predetermined wavelength band in a range of 8 $\mu$m to 14 $\mu$m. In focusing, the lenses constituting the first group G1 and the second group G2 uniformly move in an optical axis direction.

The first group G1 and the second group G2 each include a lens (convex lens) having a positive power (refractive power) and a lens (concave lens) having a negative power (refractive power), and are each configured to have a positive power. More specifically, the first group G1 is constituted by, in order from the object side to the image plane S side, a first lens L1 having a positive power and a second lens L2 having a negative power. The second group G2 is constituted by, in order from the object side to the image plane S side, a third lens L3 having a positive power and a fourth lens L4 having a negative power.

As illustrated in Fig. 1, a parallel flat plate P is disposed between the fourth lens L4 and the image plane S. The parallel flat plate P is an optical window which is hermetically sealed so as to be loaded to the image sensor, and is made of silicon, hypoxic silicon, or germanium.

As indicated by the sign "AP" in Fig. 1, an effective diameter of an object-side surface (first surface) of the first lens L1 is equivalent to an aperture of the infrared imaging lens 1. The first lens L1, the second lens L2, the third lens L3, the fourth lens L4, and the parallel flat plate P each have an anti-reflection (AR) coated surface. It is possible to apply an appropriate known technique to such anti-reflection coating in a far-infrared region.

<Details of configuration of each lens>

The infrared imaging lens 1 in accordance with the present embodiment is an infrared imaging lens that may be used in an infrared region including at least one wavelength in a range of 8 μm to 14 μm. Using, as a glass material for each lens, the chalcogenide glass having a refractive index N10, measured at a wavelength of 10 μm, of 2.5 to 4.0 makes it possible to achieve excellent properties over a wide wavelength range of 8 μm to 14 μm. The chalcogenide glass applied to the infrared imaging lens 1 will be described later in detail.

In order to enable achievement of an imaging device that allows a distant object to be enlarged and observed, the infrared imaging lens 1 in accordance with the present embodiment is configured to have a total system focal length fL not less than five times larger than a diameter φs of an image circle of the infrared imaging lens 1. This may be also defined as having a half angle of view of not more than 5°. In particular, the infrared imaging lens 1 in accordance with the present embodiment is preferably configured to have a total system focal length fL five times to ten times larger than a diameter φs of the image circle. A value of the total system focal length fL is preferably 20 mm to 100 mm.

According to the present embodiment, such a telephoto lens can be configured to achieve a bright imaging lens having an f-number in a range of 0.9 to 1.1. Further, it is possible to achieve an imaging lens exhibiting, over a wide wavelength range of at least 8 μm to 14 μm, little light absorption caused by a glass material of the lenses. This, combined with the low f-number of approximately one (1), makes it possible to provide an imaging lens which is a bright telephoto lens.

Further, the infrared imaging lens 1 in accordance with the present embodiment can be configured to have details of each part as described below. In the infrared imaging lens 1, a focal length f2 of the second group is preferably smaller than a focal length f1 of the first group. Such a configuration of the infrared imaging lens 1 makes it possible to obtain high resolution suitable for an image sensor having a pixel pitch substantially equivalent to the wavelength, while keeping aberration properties of the infrared imaging lens 1 excellent.

In particular, a configuration is preferable in which the focal length fG1 of the first group and the total system focal length fL satisfy the following relational expression:

$$2.0 \leq fG1/fL \leq 3.0,$$

and
the focal length fG2 of the second group and the total system focal length fL satisfy the following relational expression:

$$0 < fG2/fL \leq 1.0.$$

Further, it is preferable that each lens has the following configuration. The first lens L1 has a positive power and has a meniscus shape convex to the object side. The second lens L2 has a negative power and has a meniscus shape convex to the object side. The third lens L3 has a positive power and has a meniscus shape convex to the object side. The fourth lens L4 has a negative power and has a meniscus shape convex to the object side. Configuring and disposing each of the lenses in such a manner makes it possible to inhibit an increase in Petzvar sum. As a result, field curvature is prevented or reduced so that planarity of an imaging plane can be maintained.

A configuration is preferable in which the focal length f1 of the first lens, the focal length f2 of the second lens, the focal length f3 of the third lens, and the focal length f4 of the fourth lens satisfy the following relational expressions:

$$1.1 \leq |f2/f1| \leq 2.0$$

$$1.1 \leq |f4/f3| \leq 2.0.$$

Such a configuration makes it possible to provide favorable achromatic properties and to achieve a telephoto lens excellent in resolution.

In particular, with respect to an Abbe number defined in a predetermined wavelength band in a rage of 8 $\mu$m to 14 $\mu$m, in the first group G1, the second lens L2 having a negative power preferably has the Abbe number that is smaller than that of the first lens L1 having a positive power. More specifically, the second lens L2 having a negative power preferably has the Abbe number that is not less than 5% smaller than that of the first lens L1 having a positive power. With respect to a refractive index N10 measured at a wavelength of 10 $\mu$m, the second lens L2 having a negative power preferably has the refractive index N10 that is smaller than that of the first lens L1 having a positive power.

Similarly, with respect to the Abbe number defined in a predetermined wavelength band in a range of 8 $\mu$m to 14 $\mu$m, in the second group G2, the fourth lens L4 having a negative power preferably has the Abbe number that is smaller than that of the third lens L3 having a positive power. More specifically, the fourth lens L4 having a negative power preferably has the Abbe number that is not less than 5% smaller than that of the third lens L3 having a positive power. With respect to the refractive index N10 measured at a wavelength of 10 $\mu$m, the fourth lens L4 having a negative power preferably has the refractive index N10 that is smaller than that of the third lens L3 having a positive power. Such a configuration makes it possible to provide particularly favorable achromatic properties.

Here, it is appropriate to use, as the Abbe number defined in a predetermined wavelength band in a range of 8 $\mu$m to 14 $\mu$m, for example, an Abbe number defined in a wavelength band of approximately 10 $\mu$m in a case of the infrared imaging lens 1 having a designed main wavelength of 10 $\mu$m. As such, it is appropriate to select a predetermined wavelength band for defining the Abbe number, in accordance with a designed main wavelength that the infrared imaging lens 1 adopts. One example of this is an Abbe number $\nu$10 defined with a predetermined wavelength band set to be 8 $\mu$m to 12 $\mu$m. Details of the definition of the Abbe number v10 will be discussed in Numerical Example 1 described later.

The infrared imaging lens 1 is preferably configured such that an effective diameter of the object-side surface (first surface) of the first lens L1 serves as an aperture of the infrared imaging lens 1. Such a configuration makes it possible to secure a relative illuminance of approximately 100% in the entire image circle. Further, it is possible to reduce the outer diameter and the volume of the infrared imaging lens 1 in comparison with a case where an aperture diaphragm is inserted between the lenses.

The first lens L1, the second lens L2, the third lens L3, and the fourth lens L4 each may be a spherical lens. This reduces a variation in the spherical aberration and the astigmatism of the infrared imaging lens 1 depending on an image height at each wavelength. Therefore, it is possible to achieve the infrared imaging lens 1 that exhibits a small image height dependence of a modulation transfer function (MTF) and that has practicable resolution properties. However, any of the lenses may be an aspherical lens or may be an aspherical lens having a diffractive surface.

As image sensors in a far-infrared region become increasingly smaller in size, pixel pitches of the image sensors have reached a narrow pitch limit substantially equivalent to a wavelength. Such an image sensor having a reduced size can be manufactured at a low cost, as compared with the one having a large surface area. Further, a diameter of an imaging lens applied to such an image sensor also can be reduced in accordance with the surface area of the image sensor, and accordingly, it is possible to reduce the cost of the imaging lens.

Thus, application of such an image sensor and such an imaging lens to an infrared camera makes it possible to reduce a cost of the infrared camera so that the infrared camera can be suitable for a commercial use, and allows the infrared camera to be employed in various fields. As a narrow-pitch image sensor in a region in a 10 pm-wavelength band, an image sensor having a pixel pitch of 12 $\mu$m to 17 $\mu$m has been commercially available. The infrared imaging lens 1 in accordance with the present embodiment is a telephoto lens that covers a wavelength region of approximately 8 $\mu$m to 14 $\mu$m and that has resolution with which the telephoto lens is also sufficiently adapted to an infrared camera to which an image sensor having a pixel pitch of approximately 12 $\mu$m to 17 $\mu$m is applied.

<Glass material for each lens>

The following description will discuss the chalcogenide glass of which each lens of the infrared imaging lens 1 is made. The chalcogenide glass applied to the infrared imaging lens 1 is chalcogenide glass having a refractive index, measured at a wavelength of 10 $\mu$m, of 2.5 to 4.0.

Such chalcogenide glass having a high refractive index in a far-infrared region has been developed by the applicant of the present invention (see International Publication No. WO2020/105719A1). This glass material, more specifically, has achieved a refractive index N10 in a range of 2.74 to 3.92 as measured at a wavelength of 10 $\mu$m. For example, the refractive index N10 measured at a wavelength of 10 $\mu$m is preferably 2.74 to 3.92, 2.8 to 3.8, and particularly preferably 2.9 to 3.7. In a case where the refractive index N10 is too low, the focal length of the infrared imaging lens tends to be too long.

The glass material exhibits very little light absorption over a wide wavelength range in a far-infrared region, as wide as at least a wavelength of 7 $\mu$m to 14 $\mu$m. In particular, the glass material has a feature of exhibiting little light absorption even in a far-infrared region at a wavelength of 10 $\mu$m to 26 $\mu$m. It is possible to use an "infrared absorption edge wavelength" and an "internal transmittance" as indicators, indicating that chalcogenide glass is highly light-transmissive in a far-infrared region.

Note here that the infrared absorption edge wavelength refers to an absorption edge wavelength in a region at a wavelength of not less than 8 $\mu$m and is defined by a wavelength at which a light transmittance of 20% is obtained at a thickness of 2 mm of the material. The term "internal transmittance" refers to a transmittance inside the material and does not include a reflection loss on a surface of the material. Chalcogenide glass serving as a glass material of which each of the lenses is made has an infrared absorption edge wavelength of not less than 18 $\mu$m.

Thus, the chalcogenide glass also transmits therethrough even infrared radiation having a wavelength of more than 10 $\mu$m, and has a good transmittance in a wavelength range of at least 7 $\mu$m to 14 $\mu$m. The chalcogenide glass has an internal transmittance, measured at a thickness of 2 mm, of not less than 90% at a wavelength of 10 $\mu$m. As such, the infrared imaging lens 1 in accordance with the present embodiment makes it possible to achieve an imaging lens exhibiting, over a wide wavelength range of at least 7 $\mu$m to 14 $\mu$m, little light absorption caused by a glass material of the lenses.

Further, using the above chalcogenide glass facilitates high-volume manufacturing of the lens through press-molding. The press-molding also enables high-volume manufacturing of an aspherical lens. Note that "aspherical (surface)" as used herein encompasses "diffractive (surface)". The glass material preferably has a glass transition temperature as low as not more than 200°C and is desirably easily press-molded. Crystalline materials, such as silicon (Si), germanium (Ge), zinc sulfide (ZnS), and zinc selenide (ZnSe), each of which is used as a material that is transmitted through a far-infrared region, cannot be press-molded. Therefore, there is a limit to the production efficiency of the lens.

In each group of the infrared imaging lens 1 in accordance with the present embodiment, chalcogenide glass suitable for forming the lens having the larger refractive index N10 and the larger Abbe number (hereinafter, referred to as "lens A") is preferably, for example, chalcogenide glass having a refractive index N10 of not less than 3.45 and an Abbe number v10 of not less than 250. Specifically, it is preferably chalcogenide glass containing 20 mol% to 90 mol% of tellurium (Te). More specifically, it is preferably chalcogenide glass containing 20 mol% to 90 mol% of Te and 0 mol% to 50 mol% of Ge+Ga.

Unless otherwise specified, "%" as used herein means "mol%". Note that "A1+A2+..." as used herein refers to a total amount of the corresponding components. This description refers to a content of at least one component selected from the group consisting of the corresponding components, and thus, a configuration of not including a certain component of the group is also possible. For example, in a case of a configuration in which "p% to q% of A1+A2+A3+A4+A5 is preferable", a configuration of "p% to q% of A1+A2+A3+A4 (which does not include A5)" is also possible.

The following description will discuss a preferable composition of chalcogenide glass suitable for the lens A.

Te is a component of which a glass skeleton is formed and which is likely to increase an internal transmittance in a wavelength band of not less than 10 $\mu$m. Te is also a component likely to increase a refractive index. A Te content is preferably 20% to 90%, 30% to 88%, 40% to 84%, 50% to 82%, and in particular, 60% to 80%. A too low Te content is less likely to cause vitrification. A too high Te content is more likely to cause deposition of Te-based crystals. Note that other chalcogen elements Se and S are more likely to lower an internal transmittance in a wavelength band of not less than 10 $\mu$m than Te. Therefore, an Se content and an S content are each preferably 0% to 10%, 0% to 5%, 0% to 3%, and, in particular, 0% to 1%.

The chalcogenide glass suitable for the lens A preferably contains Ge and/or Ga in addition to Te. That is, Ge+Ga (a total amount of Ge and Ga) is preferably 0% to 50%, 1% to 40%, 3% to 35%, 5% to 30%, and, in particular, 10% to 30%. Containing these components makes it possible to extend a vitrification range and allow glass to be more thermally stable (allow verification to be more stable). A preferable range of each Ge and Ga component is as described below.

Ge is a component which extends a vitrification range and allows glass to be more thermally stable. A Ge content is preferably 0% to 50%, 1% to 40%, 3% to 35%, 5% to 30%, 8% to 25%, and, in particular, 10% to 20%. A too high Ge content is more likely to cause deposition of Ge-based crystals and tends to increase raw material cost.

Ga is a component which extends a vitrification range and allows glass to be more thermally stable. A Ga content is preferably 0% to 50%, 1% to 30%, 2% to 20%, 3% to 15%, and, in particular, 4% to 10%. A too high Ga content is more likely to cause deposition of Ga-based crystals and tends to increase raw material cost.

For allowing vitrification to be more stable, it is preferable that a total Ge, Ga, and Te content be large. Specifically, Ge+Ga+Te is preferably not less than 50%, not less than 60%, not less than 70%, and, in particular, not less than 80%. However, in order to introduce other components, the upper limit of Ge+Ga+Te may be not more than 98%, not more than 96%, not more than 95%, and, in particular, not more than 90%.

The chalcogenide glass suitable for the lens A can contain, in addition to the above components, various components as described below.

Ag is a component which allows glass to be more thermally stable and to have a higher refractive index. An Ag content is preferably 0% to 50%, more than 0% to 50%, 1% to 45%, 2% to 40%, 3% to 35%, 4% to 30%, 5% to 25%, and, in particular, 5% to 20%. A too high Ag content is less likely to cause vitrification.

Si is a component which allows glass to be more thermally stable. An Si content is preferably 0% to 50%, more than 0% to 50%, 1% to 45%, 2% to 40%, 3% to 35%, 4% to 30%, 5% to 25%, and, in particular, 5% to 20%. A too high Si content is more likely to cause infrared absorption caused by Si. This makes infrared transmission difficult. Note that since Si is a component likely to reduce an Abbe number, the Si content is preferably not more than 5%, not more than 1%, not more than 0.5%, and, in particular, less than 0.1% for increasing an Abbe number.

Al, Ti, Cu, In, Sn, Bi, Cr, Sb, Zn, and Mn are each a component which, without decreasing the infrared transmittance properties, allows glass to be more thermally stable. An Al+Ti+Cu+In+Sn+Bi+Cr+Sb+Zn+Mn content (a total amount of Al, Ti, Cu, In, Sn, Bi, Cr, Sb, Zn, and Mn) is preferably 0% to 40%, 2% to 35%, 4% to 30%, and, in particular, 5% to 25%. A too high Al+Ti+Cu+In+Sn+Bi+Cr+Sb+Zn+Mn content is less likely to cause vitrification.

Contents of Al, Ti, Cu, In, Sn, Bi, Cr, Sb, Zn, and Mn components are each preferably 0% to 40%, 1% to 40%, 1% to 30%, 1% to 25%, and, in particular, 1% to 20%. Among the above components, Al, Cu, and/or Sn are/is preferably used because these components are particularly highly effective in allowing glass to be more thermally stable. However, since Al and Sn are each a component likely to reduce an Abbe number, an Al content and an Sn content are each preferably not more than 5%, not more than 1%, not more than 0.5%, and, in particular, less than 0.1% for increasing an Abbe number.

F, Cl, Br, and I are each a component which allows glass to be more thermally stable. An F+Cl+Br+I content (a total amount of F, Cl, Br, and I) is preferably 0% to 40%, 2% to 35%, 4% to 30%, and, in particular, 5% to 25%. A too high F+Cl+Br+I content is less likely to cause vitrification and is more likely to cause a decrease in weatherability. Contents of F, Cl, Br, and I components are each preferably 0% to 40%, 1% to 40%, 1% to 30%, 1% to 25%, and, in particular, 1% to 20%. Among the above components, I is preferable. This is because I can be an element material and is particularly highly effective in allowing glass to be more thermally stable.

For particularly reducing a burden on the environment, it is particularly preferable that Se or As is substantially not contained. In the present invention, the expression "substantially not contained" means that a content of it is less than 0.1 mol%. It is preferable that Cd, Tl, or Pb be substantially not contained. This makes it possible to minimize environmental impacts.

As such, the chalcogenide glass suitable for the lens A has a larger refractive index N10 and a larger Abbe number than those of chalcogenide glass suitable for a lens B described later. In the present invention, as a specific example of such chalcogenide glass, chalcogenide glass CG1 having a refractive index N10 of 3.465 and an Abbe number v10 of 253 is used.

Further, in each group of the infrared imaging lens 1 in accordance with the present embodiment, chalcogenide glass suitable for forming the lens having the smaller refractive index N10 and the smaller Abbe number (hereinafter, referred to as "lens B") is preferably, for example, chalcogenide glass having a refractive index N10 of less than 3.45 and an Abbe number v10 of less than 250. Specifically, it is preferable that 25 mol% to 90 mol% of S+Se+Te, 0.1 mol% to 30 mol% of Sn, 0.1 mol% to 15 mol% of Ag, and 1 mol% to 30 mol% of Ge+Sn be contained, and (Ge+Sn)/(S+Se+Te) be not more than 0.3. In the present invention, "x/y" refers to a value obtained by dividing a component x content by a component y content.

The following description will discuss a preferable composition of the chalcogenide glass suitable for the lens B.

S, Se, and Te are each a component of which a glass skeleton is formed. An S+Se+Te content (a total amount of S, Se, and Te) is preferably 25% to 90%, 30% to 89%, 40% to 89%, 50% to 85%, 50% to 82%, and, in particular, 50% to 80%. A too low S+Se+Te content is less likely to cause vitrification. A too high S+Se+Te content is more likely to cause deposition of S-, Se-, or Te-based crystals and reduce an internal transmittance. Preferable ranges of the contents of the components are as follows.

An S content is preferably 0% to 90%, 10% to 90%, 20% to 89%, 30% to 89%, 40% to 88%, 50% to 88%, 50% to 80%, and, in particular, 50% to 75%. Note, however, that S is a component likely to reduce an internal transmittance at a wavelength of not less than 10 $\mu$m. Therefore, for improving an internal transmittance in an infrared region, an S content is preferably not more than 30%, not more than 20%, not more than 10%, not more than 5%, not more than 3%, and, in particular, not more than 1%.

An Se content is preferably 0% to 90%, 10% to 90%, 20% to 89%, 30% to 89%, 40% to 88%, 50% to 88%, 50% to 80%, and, in particular, 50% to 75%. Note, however, that Se is a toxic component. Therefore, for reducing a burden on the environment, an Se content is not more than 40%, not more than 30%, not more than 20%, not more than 10%, not more than 5%, not more than 3%, and not more than 1%, and, in particular, it is preferable that Se is substantially not contained.

A Te content is preferably 0% to 90%, 1% to 90%, 10% to 90%, 20% to 89%, 30% to 89%, 40% to 88%, 50% to 88%, 50% to 80%, and, in particular, 50% to 75%. Te is a component likely to increase a refractive index. A too high Te content is less likely to cause vitrification. It is also more likely to cause deposition of Te-based crystals and reduce an internal transmittance.

It is sufficient that at least one component of S, Se, and Te is contained. However, for increasing an internal transmittance in a wavelength band of not less than 10 $\mu$m, it is particularly preferable that at least Te be contained. Containing Te makes it likely to allow an infrared absorption edge wavelength to be not less than 20 $\mu$m.

Sn is a component likely to reduce the Abbe number of the glass material. It is also advantageously likely to increase a refractive index. An Sn content is preferably 0.1% to 30%, 0.1% to 28%, 0.1% to 26%, 0.3% to 26%, 0.3% to 24%, and, in particular, 0.5% to 22%. A too low Sn content is more likely to increase an Abbe number. A too high Sn content is less likely to cause vitrification. For particularly increasing an internal transmittance, the Sn content is preferably not more than 20%, not more than 15%, not more than 12%, not more than 10%, not more than 8%, and, in particular, not more than 5%.

A Te+Sn content (a total amount of Te and Sn content) is preferably 0.1% to 99%, 1% to 99%, 10% to 99%, 20% to 99%, 30% to 99%, 30% to 95%, and, in particular, 30% to 90%. A too low Te+Sn is less likely to cause vitrification. A too high Te+Sn is more likely to reduce an internal transmittance.

Ag is a component which extends a vitrification range and allows glass to be more thermally stable. It is also a component likely to increase an internal transmittance and a refractive index of glass. An Ag content is preferably 0.1% to 15%, 0.1% to 14%, 0.3% to 14%, and, in particular, 0.5% to 14%. A too low Ag content is more likely to lower an internal transmittance of glass. A too high Ag content is less likely to cause vitrification.

An Sn+Ag content (a total amount of Sn and Ag) is preferably 1% to 30%, 1% to 28%, 1% to 25%, 3% to 25%, and, in particular, 3% to 23%. Sn+Ag satisfying the above values is likely to cause vitrification. A too low Sn+Ag content is more likely to narrow a vitrification range and increase an Abbe number. A too high Sn+Ag content is less likely to cause vitrification. For particularly increasing an internal transmittance, the upper limit of the Sn+Ag content is preferably not more than 20%, not more than 15%, not more than 12%, not more than 10%, not more than 8%, and, in particular, not more than 5%.

For particularly reducing the Abbe number, Sn/(Sn+Ag) is preferably not less than 0.01, not less than 0.1, not less than 0.2, and, in particular, not less than 0.3. On the other hand, too large Sn/(Sn+Ag) is less likely to cause vitrification. It is also more likely to reduce an internal transmittance. Therefore, the upper limit thereof is preferably not more than 0.99 and, in particular, not more than 0.98.

For increasing an internal transmittance of the glass material, Ag/(Sn+Ag) is preferably not less than 0.01, not less than 0.1, not less than 0.2, and, in particular, not less than 0.25. On the other hand, too large Ag/(Sn+Ag) is likely to increase an Abbe number. Therefore, the upper limit thereof is preferably not more than 0.99, not more than 0.9, not more than 0.8, and, in particular, not more than 0.75.

Ge is a component of which a glass skeleton is formed. It is also likely to allow glass to be more thermally stable. A Ge content is preferably 0% to 30%, 0.1% to 30%, 0.1% to 25%, 0.3% to 25%, 0.3% to 24%, and in particular, 0.5% to 22%. A too high Ge content is more likely to reduce an internal transmittance. Further, it is more likely to increase raw material cost.

A Ge+Sn content (a total amount of Ge and Sn) is preferably 1% to 30%, 1% to 28%, 1% to 26%, 3% to 25%, 3% to 24%, 5% to 24%, and, in particular, 8% to 23%. Ge+Sn satisfying the above values is likely to cause vitrification. For stabilizing vitrification, both Ge and Sn components are each preferably contained in an amount of not less than 0.1%, not less than 0.3%, and, in particular, not less than 0.5%.

(Ge+Sn)/(S+Se+Te) is preferably not more than 0.3, not more than 0.29, not more than 0.28, and, in particular, not more than 0.25. (Ge+Sn)/(S+Se+Te) satisfying the above values is likely to cause vitrification. The lower limit of (Ge+Sn)/(S+Se+Te) is, for example, not less than 0.04.

In a case where Te is contained as an essential component, (Ge+Sn)/Te is preferably not more than 0.3, not more than 0.29, not more than 0.28, and, in particular, not more than 0.25. (Ge+Sn)/Te satisfying the above values is likely to cause vitrification. The lower limit of (Ge+Sn)/Te is, for example, not less than 0.04.

The chalcogenide glass suitable for the lens B can contain, in addition to the above components, various components as described below.

Ga, Sb, and Bi are each a component which is likely to extend a vitrification range and allow glass to be more thermally stable. A Ga+Sb+Bi content (a total amount of Ga, Sb, and Bi) is preferably 0% to 50%, 0.1% to 50%, 0.3% to 40%, 0.5% to 30%, and, in particular, 1% to 30%. A too high Ga+Sb+Bi content is less likely to cause vitrification. Contents of Ga, Sb, and Bi components are each preferably 0% to 50%, 0.1% to 50%, 0.1% to 40%, 0.1% to 30%, 0.1% to 25%, 0.3% to 25%, 0.5% to 25%, and, in particular, 1% to 25%. Further, for facilitating vitrification, Ga is particularly preferably contained.

Ga/(S+Se+Te) is preferably not more than 2, not more than 1.9, not more than 1.8, not more than 1.5, not more than 1, not more than 0.7, and, in particular, not more than 0.5. Further, it is preferably not less than 0, not less than 0.04, not less than 0.05, and, in particular, not less than 0.1. Ga/(S+Se+Te) satisfying the above values is likely to cause vitrification.

In a case where Te is contained as an essential component, Ga/Te is preferably not more than 2, not more than 1.9, not more than 1.8, not more than 1.5, not more than 1, not more than 0.7, and, in particular, not more than 0.5. Further, it is preferably not less than 0, not less than 0.04, not less than 0.05, and, in particular, not less than 0.1. Ga/Te satisfying the above values is likely to cause vitrification.

A Ge+Ga content (a total amount of Ge and Ga) is preferably 0% to 60%, 0.1% to 60%, 0.1% to 55%, and, in particular, 0.5% to 55%. Ge+Ga satisfying the above values is likely to cause vitrification and allow glass to be more thermally stable. A too high Ge+Ga content is likely to cause deposition of Ge- or Ga-based crystals and reduce an internal transmittance. For stabilizing vitrification, both Ge and Ga components are each preferably contained in an amount of not less than 0.1%.

(Ge+Ga)/(S+Se+Te) is preferably not more than 2, not more than 1.9, not more than 1.8, not more than 1.5, not more than 1.2, and, in particular, not more than 1. Further, (Ge+Ga)/(S+Se+Te) is preferably not less than 0.04, not less than 0.05, and, in particular, not less than 0.1. (Ge+Ga)/(S+Se+Te) satisfying the above values is likely to cause vitrification.

In a case where Te is contained as an essential component, (Ge+Ga)/Te is preferably not more than 2, not more than 1.9, not more than 1.8, not more than 1.5, not more than 1.2, and, in particular, not more than 1. Further, it is preferably not less than 0.04, not less than 0.05 and, in particular, not less than 0.1. (Ge+Ga)/Te satisfying the above values is likely to cause vitrification.

For particularly increasing an internal transmittance, Bi/(Ga+Sb+Bi) is preferably less than 1, not more than 0.5, not more than 0.3, and, in particular, not more than 0.1.

F, Cl, Br, and I are each a component likely to extend a vitrification range and allow glass to be more thermally stable. It is also a component likely to increase an internal transmittance. An F+Cl+Br+I content (a total amount of F, Cl, Br, and I) is preferably 0% to 20%, 0% to 15%, 0% to 10%, 0% to 5%, 0% to 4%, 0% to 3%, 0% to 2%, 0% to 1%, and, in particular, 0.1% to 1%. A too high F+Cl+Br+I content is less likely to cause vitrification. In addition, it is more likely to reduce weatherability.

A Cl+I content (a total amount of Cl and I) is preferably 0% to 20%, 0% to 15%, 0% to 10%, 0% to 5%, 0% to 4%, 0% to 3%, 0% to 2%, 0% to 1%, and, in particular, 0.1% to 1%. Contents of F, Cl, Br, and I components are each preferably 0% to 20%, 0% to 15%, 0% to 10%, 0% to 5%, 0% to 4%, 0% to 3%, 0% to 2%, 0% to 1%, and, in particular, 0.1% to 1%.

Al and Si are each a component of which a glass skeleton is formed and which is likely to reduce an Abbe number to increase dispersion of glass. An Al+Si content (a total amount of Al and Si) is preferably 0% to 50%, 0% to 40%, 0% to 30%, 0% to 20%, 0% to 15%, and, in particular, 0% to 10%. A too high Al+Si content is more likely to reduce an internal transmittance. Contents of Al and Si components are each preferably 0% to 50%, 0% to 40%, 0% to 30%, 0% to 20%, 0% to 15%, and, in particular, 0% to 10%.

Zn, In, and Cu are each a component likely to extend a vitrification range and allow glass to be more thermally stable. A Zn+In+Cu content (a total amount of Zn, In, and Cu) is preferably 0% to 50%, 0% to 40%, 0% to 30%, 0% to 25%, 0% to 20%, 0% to 15%, 0% to 12%, 0% to 10%, and, in particular, 0% to 5%. A too high Zn+In+Cu content is less likely to cause vitrification. Contents of the Zn, In, and Cu components are each preferably 0% to 50%, 0% to 40%, 0% to 30%, 0% to 25%, 0% to 20%, 0% to 15%, 0% to 12%, 0% to 10%, and, in particular, 0% to 5%.

For example, B, C, Cr, Mn, Ti, and Fe may also be contained. A B+C+Cr+Mn+Ti+Fe content (a total amount of B, C, Cr, Mn, Ti and Fe) is preferably 0% to 40%, 0% to 30%, 0% to 20%, 0% to 10%, 0% to 5%, 0% to 1%, and, in particular, 0% to less than 1%. A too high content of these components may make it difficult to provide desired optical properties. Contents of the B, C, Cr, Mn, Ti, and Fe components are each preferably 0% to 10%, 0% to 5%, 0% to 1%, and, in particular, 0% to less than 1%.

As is a component which allows glass to be more thermally stable. However, since As is a toxic component, for reducing a burden on the environment, an As content is not more than 30%, not more than 25%, not more than 20%, not more than 10%, not more than 5%, and not more than 1%, and in particular, it is preferable that As is substantially not contained. For particularly reducing a burden on the environment, it is particularly preferable that Se be substantially not contained. It is preferable that Cd, Tl, or Pb be substantially not contained. This makes it possible to minimize environmental impacts.

As described above, the chalcogenide glass suitable for the lens B has a smaller refractive index N10 and a smaller Abbe number than those of the chalcogenide glass suitable for forming the lens A. In the present invention, as a specific example of such chalcogenide glass, chalcogenide glass CG2 having a refractive index N10 of 3.419 and an Abbe number v10 of 226 is used. The chalcogenide glass CG2 has the above properties and thus, when applied to the first group G1 and the second group G2 of the infrared imaging lens 1, the chalcogenide glass CG2 makes it possible to provide sufficient achromatic properties.

Next, the temperature dependence of the refractive index N10 was studied. The refractive index N10 of the chalcogenide glass CG1 had a temperature dependence dN10/dT of $294 \times 10^{-6}$/K, and the refractive index N10 of the chalcogenide glass CG2 had a temperature dependence dN10/dT of $244 \times 10^{-6}$/K. These values are similar. Therefore, even if the infrared imaging lens 1 is configured by combining a lens made of the chalcogenide glass CG1 and a lens made of the chalcogenide glass CG2, variation due to an image height in a focal position is prevented from being increased by a temperature, and a temperature dependence of focal properties is favorable.

<Numerical Example 1>

The following description will discuss a numerical example of the infrared imaging lens 1. The cross-sectional view of the infrared imaging lens in accordance with Numerical Example 1 is as illustrated in Fig. 1. In Numerical Example 1, "r" represents a radius of curvature, "d" represents a lens thickness on the optical axis or a distance on the optical axis between surfaces, and "ED" represents an effective diameter (diameter). The unit of length is (mm). Basic lens data and various data are shown below.

[Table 1]

| Numerical Example 1 | | Basic lens data | | | |
|---|---|---|---|---|---|
| Surface Number | r (mm) | d (mm) | N10 | v10 | ED (mm) |
| Object Surface | | ∞ | | | |
| 1 | 81.42 | 4.950 | 3.46501 | 253 | 50.0 |
| 2 | 351.30 | 1.700 | | | 49.3 |
| 3 | 761.30 | 3.000 | 3.41873 | 226 | 47.9 |
| 4 | 116.23 | 69.350 | | | 46.1 |
| 5 | 24.14 | 5.000 | 3.46501 | 253 | 29.9 |
| 6 | 36.16 | 0.500 | | | 27.2 |
| 7 | 25.60 | 2.500 | 3.41873 | 226 | 25.1 |
| 8 | 19.25 | 11.001 #1 | | | 21.3 |
| 9 | ∞ | 1.000 | 3.41776 | | 17.1 |
| 10 | ∞ | 0.500 | | | 16.7 |
| Image Surface | | | | | 8.3 |
| #1 Variable by Focusing | | | | | |

The refractive index and the Abbe number v10 are as defined below.

N8: a refractive index measured at a wavelength of 8 $\mu$m
N10: a refractive index measured at a wavelength of 10 $\mu$m
N12: a refractive index measured at a wavelength of 12 $\mu$m

$$\nu 10 = (N10 - 1)/(N8 - N12)$$

[Table 2]

| Numerical Example 1 Various Data | |
|---|---|
| Aperture Position | Corresponding to first surface. Aperture diameter Φ 50.00mm |
| f-Number | 1.0 |
| Maximum Half Angle of View | 4.7° |
| Maxumum Image Height | 4.1 mm |
| Total system focal length | 50.0 mm |
| Back Focus | 12.5 mm (d8+d9+d10) |
| Total Lens Length | 99.5 mm |

The above chalcogenide glass CG1 having a refractive index N10 of 3.465 and an Abbe number $\nu$10 of 253 is used for the first lens L1 and the third lens L3. The above chalcogenide glass CG2 having a refractive index N10 of 3.419 and an Abbe number $\nu$10 of 226 is used for the second lens L2 and the fourth lens L4. The infrared imaging lens 1 has a quadruple-lens configuration and can be made lightweight. Combined with the fact that the lenses are spherical lenses and thus are simple, and can be manufactured through press-molding, the infrared imaging lens 1 can be manufactured at a low cost that enables the infrared imaging lens 1 to be applied to a commercial use.

The parallel flat plate P is made of silicon (Si). Optical property simulation was carried out using, as a wavelength dispersion of a refractive index of silicon, a known literature value. The parallel flat plate P is provided for protecting the image sensor. The back focal length BFL=12.5 mm is an actual length and secures a sufficient distance.

The maximum image height on the image plane S is 4.1 mm. Thus, the image circle has a diameter $\varphi$s of 8.2 mm. Therefore, the infrared imaging lens 1 is applicable to a QVGA-class image sensor, such as one which has a diagonal length of 8.16 mm and which has 384 × 288 pixels having a pixel pitch of 17 μm. Further, the infrared imaging lens 1 can cover pixel regions of respective QVGA-class image sensors including QVGA (320 × 240 pixels) having a pixel pitch of 17 μm and QVGA+ (345 × 240 pixels) having a pixel pitch of 17 μm.

It is needless to say that the infrared imaging lens 1 can cover a pixel region of a QVGA-class image sensor which has 320 × 256 pixels having a pixel pitch of 12 μm. Note that the configuration of, for example, the 384 × 288 pixels having a pixel pitch of 12 μm or the 320 × 256 pixels having a pixel pitch of 12 μm makes it possible to secure the number of effective pixels of the QVGA (320 × 240 pixels) even if the optical axis of the lens is not perfectly concentric with the image sensor.

A ratio of the total system focal length fL of the infrared imaging lens 1 relative to a diameter φs of the image circle of the infrared imaging lens 1 is as follows:

$$fL/\varphi s = 6.1.$$

That is, the infrared imaging lens 1 is a telephoto lens. In addition, the infrared imaging lens 1 has a maximum half angle of view of 4.7°. This is in a range of not more than 5°, within which the infrared imaging lens 1 can be regarded as a telephoto lens having a long focal distance. The infrared imaging lens 1 is a telephoto lens having such a narrow angle of view and is an imaging lens having an f-number of 1.0, i.e., is a very bright imaging lens.

The focal lengths of the first lens, the second lens, the third lens, and the fourth lens are respectively f1=42.44(mm), f2=-57.03(mm), f3=22.73(mm), and f4=-44.47(mm). Therefore, the infrared imaging lens 1 is configured so that the third lens L3 has a stronger power than that of the first lens L1. Further, the infrared imaging lens 1 is configured so that the fourth lens L4 has a stronger power than that of the second lens L2.

In the first group, a focal length ratio of the second lens L2 relative to the first lens L1 is as follows:

$$|f2/f1| = 1.34.$$

This is within a range of not less than 1.1 and not more than 2.0. In the second group, a focal length ratio of the fourth lens L4 relative to the third lens L3 is as follows:

$$|f4/f3| = 1.96.$$

This is within a range of not less than 1.1 and not more than 2.0. With these ratios, the infrared imaging lens 1 is configured to have favorable achromatic properties.

The focal length of the first group is fG1=126.84(mm) and the focal length of the second group is fG2=34.07(mm). Ratios of the focal lengths of the groups relative to the total system focal length fL is as follows:

$$fG1/fL = 2.54$$

$$fG2/fL = 0.68.$$

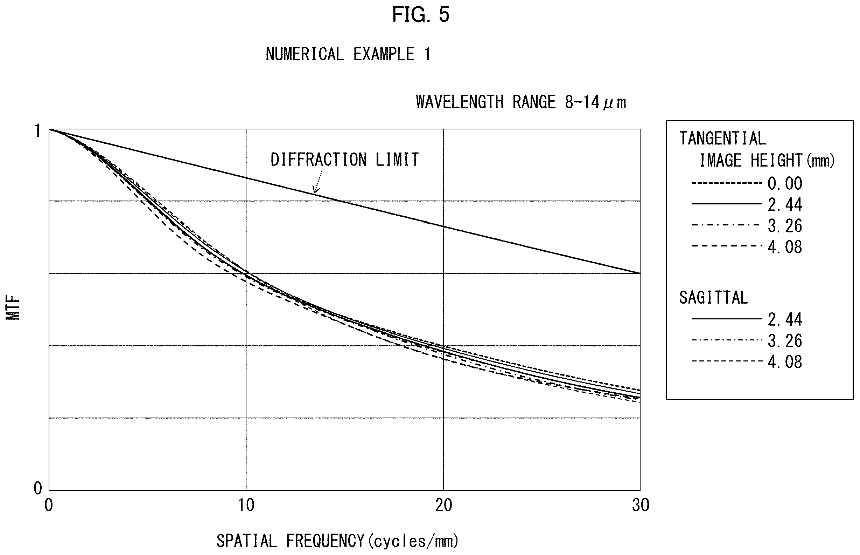

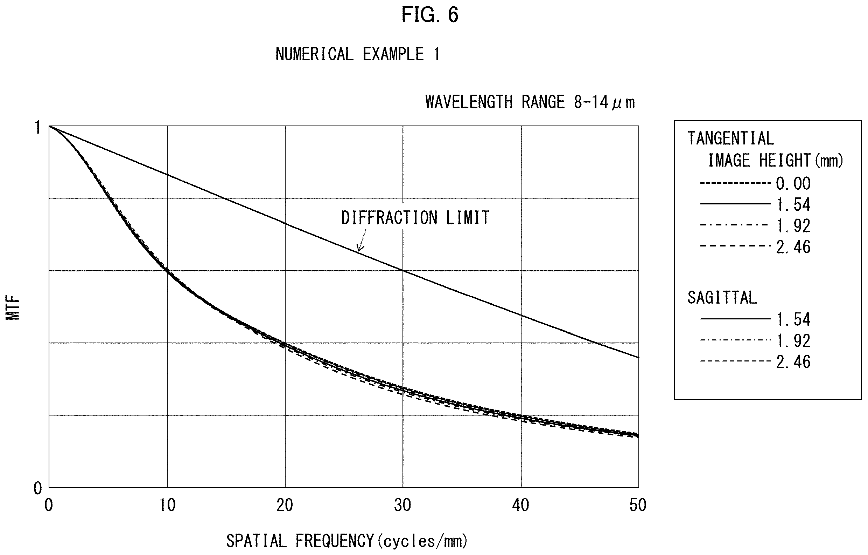

Setting the focal lengths of the respective groups relative to the total system focal lengths fL as describe above allows the infrared imaging lens 1 to have balanced favorable optical properties as a whole. This is reflected in MTF properties (Figs. 5 and 6) described later.

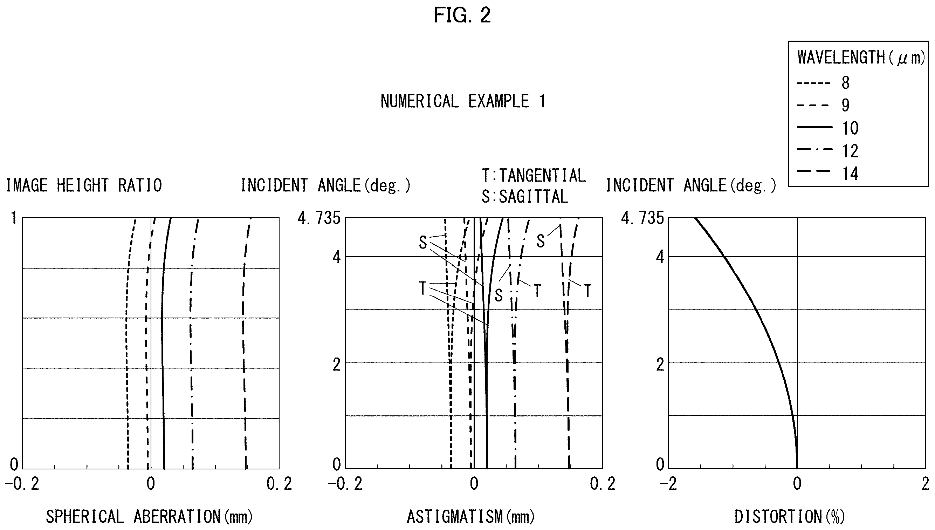

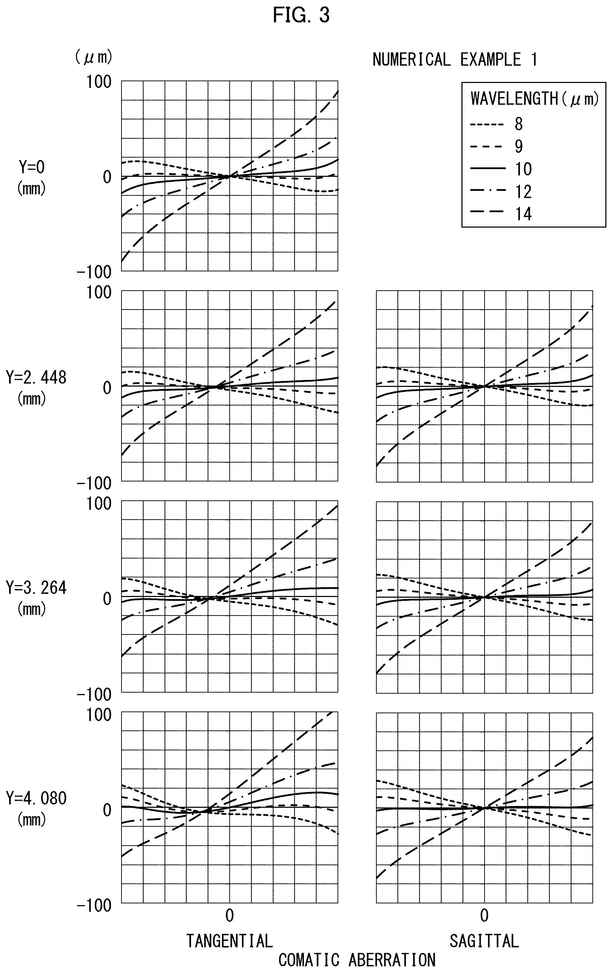

Figs. 2 to 7 show various performances of the infrared imaging lens 1 in Numerical Example 1. Figs. 2 and 3 are aberration diagrams of the infrared imaging lens 1. Fig. 2 shows spherical aberration, astigmatism, and distortion. For each, graphs corresponding to respective wavelengths ranging from 8 μm to 14 μm are shown. Fig. 3 is an aberration diagram illustrating comatic aberration at image heights Y ranging from 0 mm up to the maximum image height, for each of a tangential (meridional) direction and a sagittal (radial) direction. As illustrated in Figs. 2 and 3, the infrared imaging lens 1 in accordance with Numerical Example 1 has various types of aberration satisfactorily corrected over a wide wavelength region of 8 μm to 14 μm.

For a long-focal length telephoto lens having a total system focal length fL not less than five times larger than the diameter φs of the image circle or having a half angle of view of not more than 5°, a chromatic aberration is a significant problem in improving resolution. In a case where all the lenses constituting an imaging lens are each made of the same material, a distance obtained by multiplying the total system focal length fL by the multiplicative inverse of the Abbe number of the material corresponds to a limit value Δf of an amount of a residual paraxial chromatic aberration. Assuming that all the lenses constituting the infrared imaging lens 1 are each made of a single material having an Abbe number ν10 of 253 which is defined with a refractive index difference measured at a wavelength of 8 $\mu$m to 12 $\mu$m, a limit value $\Delta$f of an amount of residual paraxial chromatic aberration thereof is estimated to be approximately 0.2 mm.

According to the drawing of the spherical aberration in Fig. 2, a difference in paraxial chromatic aberration between a wavelength of 8 $\mu$m and a wavelength of 12 $\mu$m is 0.1 mm. This corresponds to an amount of the paraxial chromatic aberration. As described above, in the infrared imaging lens 1 configured by, in each group, combining pieces of chalcogenide glass that have different Abbe numbers $\nu$10 on the basis of an appropriate design, an amount of a residual paraxial chromatic aberration thereof is greatly improved and the entire chromatic aberration is improved compared with an expected value of an infrared imaging lens made of sole chalcogenide glass.

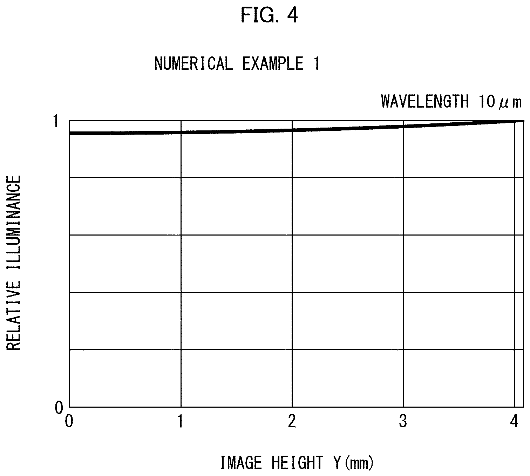

Fig. 4 is a graph showing a relative illuminance to an image height Y in Numerical Example 1 of the infrared imaging lens 1. Note here that the relative illuminance refers to an illuminance ratio relative to the maximum illuminance on the image plane S. As shown in Fig. 4, in a range up to the maximum image height, the relative illuminance at a wavelength of 10 $\mu$m is not less than 0.95, which is approximately 1, that is, a highly uniform light-quantity distribution is obtained in the image circle.

Fig. 5 is a graph showing spatial frequency dependence of an MTF in a wavelength range of 8 $\mu$m to 14 $\mu$m. An image sensor having 384 $\times$ 288 pixels having a pixel pitch of 17 $\mu$m has a Nyquist frequency $f_N$ of 29.4 cycles/mm and a maximum image height of 4.08 mm. Fig. 5 shows the results in a range of a spatial frequency of 0 to 30 cycles/mm and in a range of an image height of 0 to 4.08 mm.

In MTF properties over a wide wavelength range of 8 $\mu$m to 14 $\mu$m, the MTF at the image center at a Nyquist frequency $f_N$ = 29.4 (cycles/mm) is 0.28, and MTF >0.25 (simple average in a tangential direction and a sagittal direction) is secured in a region of the image sensor. The infrared imaging lens 1 has an extremely small image height dependence of the MTF properties exhibited when the infrared imaging lens 1 is applied to such an image sensor, and thus has practicable properties.

Fig. 6 is also a graph showing spatial frequency dependence of an MTF in a wavelength range of 8 $\mu$m to 14 $\mu$m. An image sensor having 320 $\times$ 256 pixels having a pixel pitch of 12 $\mu$m has a Nyquist frequency $f_N$ of 41.7 cycles/mm and a maximum image height of 2.46 mm. Fig. 6 shows the results in a range of a spatial frequency of 0 to 50 cycles/mm and in a range of an image height of 0 to 2.46 mm.

In MTF properties over a wide wavelength range of 8 $\mu$m to 14 $\mu$m, the MTF at the image center at a Nyquist frequency $f_N$ = 41.7(cycles/mm) is 0.19, and MTF>0.177 (simple average in a tangential direction and a sagittal direction) is secured in a region of the image sensor. The infrared imaging lens 1 has an extremely small image height dependence of the MTF properties exhibited when the infrared imaging lens 1 is applied to such an image sensor, and thus has practicable properties.

As described above, the infrared imaging lens 1 makes it possible to provide favorable resolution in regions of QVGA-class image sensors which have pixel pitches from approximately 12 $\mu$m to 17 $\mu$m. The infrared imaging lens 1 thus makes it possible to provide favorable resolution in a wavelength range of 8 $\mu$m to 14 $\mu$m.

The infrared imaging lens 1 is designed so that the first group and the second group are each made up of a combination of a lens having a positive power (convex lens) and a lens having a negative power (concave lens) and have the ratios fG1/fL and fG2/fL at the levels described above. This inhibits an increase in Petzvar sum, and MTF properties balanced at each image height are achieved.

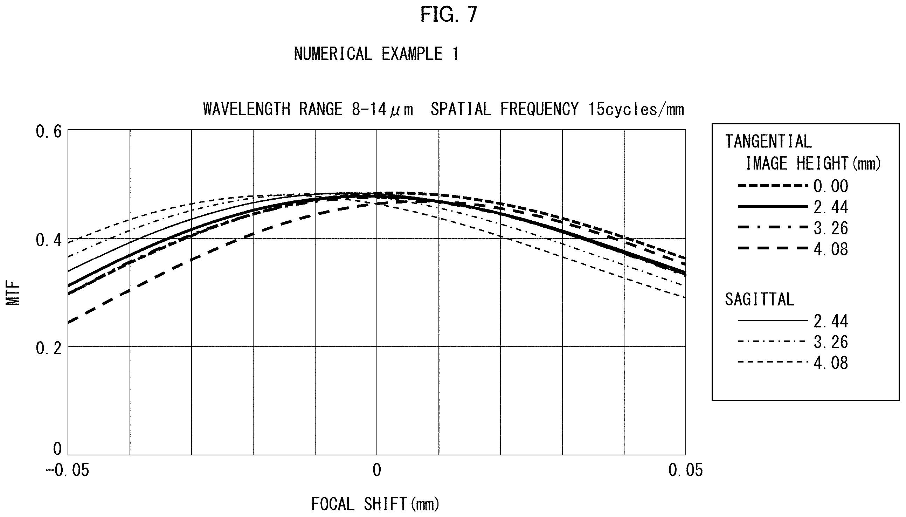

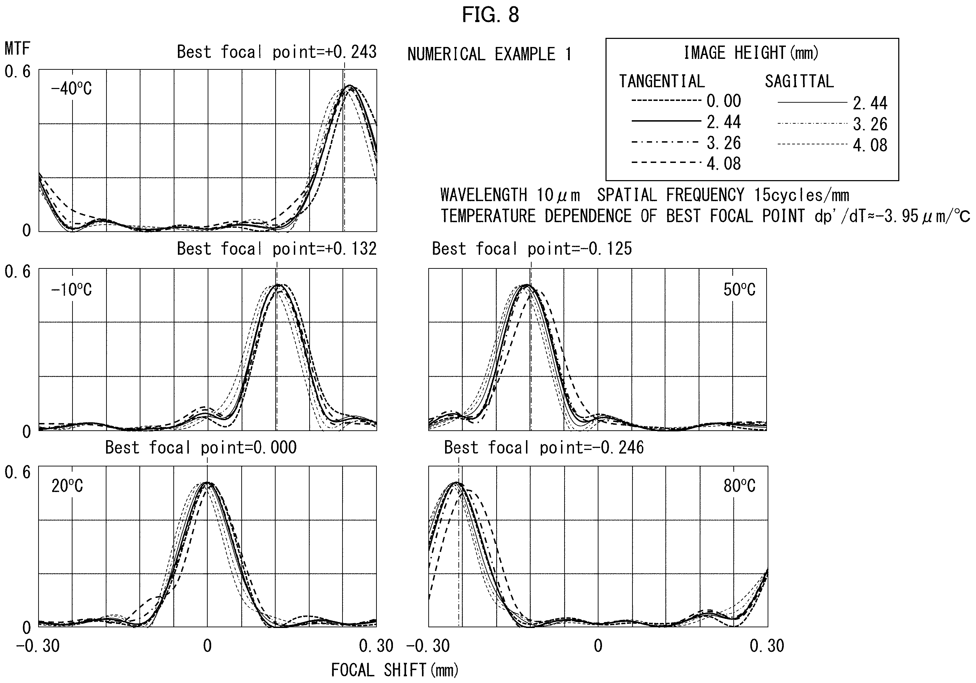

Fig. 7 is a graph showing a change, with respect to a focal shift, in MTF at a spatial frequency of 15 cycles/mm in a wavelength range of 8 $\mu$m to 14 $\mu$m. Fig. 8 is a graph showing a temperature dependence of a change, with respect to a focal shift, in MTF at a wavelength of 10 $\mu$m at a spatial frequency of 15 cycles/mm. As illustrated in Fig. 8, over a wide temperature range from -40°C to 80°C, the focal positions of the image heights do not vary, and a very favorable temperature dependence of focal properties is exhibited. Specifically, a temperature dependence dp'/dT of a best focal point was - 3.95um/°C. In addition, the best focal point keeps very favorable linearity with respect to a temperature change. This makes it possible to provide a mechanism that mechanically prevents a focus position from being displaced with use of, for example, thermal expansion of metal or resin.

As described above, the infrared imaging lens 1 in Numerical Example 1 has, in a wavelength range of 8 $\mu$m to 14 $\mu$m, favorable resolution that is sufficiently suitable for a QVGA-class image sensor which has a pixel pitch of approximately 12 $\mu$m to 17 $\mu$m. Further, since the infrared imaging lens 1 has an f-number of 1.0, which is extremely bright despite being a telephoto lens having a long focal length (fL/$\varphi$s: 5 to 10), the infrared imaging lens 1 has properties sufficiently suitable for such an image sensor having a small pixel pitch. As described above, the present embodiment makes it possible to achieve an infrared imaging lens which is a telephoto lens that has not existed conventionally and that has excellent properties.

Aspects of the present invention can also be expressed as follows:

Aspect 1 of the present disclosure is an infrared imaging lens used in an infrared region including at least one wavelength in a range of 8 $\mu$m to 14 $\mu$m, the infrared imaging lens comprising a first group consisting of a plurality of lenses and a second group consisting of a plurality of lenses, the first group and the second group being disposed in order from an object side to an image plane side, the plurality of lenses constituting the first group and the plurality of lenses constituting the second group being each made of chalcogenide glass having a refractive index, measured at a wavelength of 10 $\mu$m, of 2.5 to 4.0, the first group and the second group each including the plurality of lenses each made of the chalcogenide glass that has a different Abbe number defined in a predetermined wavelength band in a range of 8 $\mu$m to 14 $\mu$m, the infrared imaging lens having a total system focal length not less than five times larger than a diameter of an image circle of the infrared imaging lens.

The above configuration makes it possible to achieve an infrared imaging lens that is a telephoto lens which has excellent resolution suitable for an image sensor having a pixel pitch substantially equivalent to the wavelength.

An infrared imaging lens in accordance with Aspect 2 of the present disclosure is configured, in Aspect 1 above, such that the first group and the second group each include a lens having a positive power and a lens having a negative power and are each configured to have a positive power. The above configuration makes it possible to achieve an infrared imaging lens that is a telephoto lens which has particularly excellent resolution suitable for an image sensor having a pixel pitch substantially equivalent to the wavelength.

An infrared imaging lens in accordance with Aspect 3 of the present disclosure is configured, in Aspect 1 above, such that the first group has a positive power and is constituted by, in order from the object side to the image plane side, a first lens having a positive power and a second lens having a negative power, and the second group has a positive power and is constituted by, in order from the object side to the image plane side, a third lens having a positive power and a fourth lens having a negative power. The above configuration makes it possible to achieve an infrared imaging lens that is a telephoto lens which can keep excellent resolution, even when a temperature is changed.

An infrared imaging lens in accordance with Aspect 4 of the present disclosure is configured, in Aspect 3 above, such that the first lens, the second lens, the third lens, and the fourth lens are each a meniscus lens convex to the object side. The above configuration makes it possible to inhibit an increase in Petzvar sum. As a result, field curvature is prevented or reduced so that planarity of the focal plane can be maintained.

An infrared imaging lens in accordance with Aspect 5 of the present disclosure is configured, in Aspect 3 or 4 above, such that the first lens, the second lens, the third lens, and the fourth lens are each a spherical lens. The above configuration makes it possible to achieve the infrared imaging lens 1 that has a small image height dependence of an MTF and that has practicable resolution properties.

An infrared imaging lens in accordance with Aspect 6 of the present disclosure is configured, in any one of Aspects 3 to 5 above, such that the refractive index and the Abbe number of the chalcogenide glass of which the second lens is made are smaller than those of the chalcogenide glass of which the first lens is made, and the refractive index and the Abbe number of the chalcogenide glass of which the fourth lens is made are smaller than those of the chalcogenide glass of which the third lens is made. The above configuration makes it possible to provide favorable achromatic properties and to achieve a telephoto lens excellent in resolution.

An infrared imaging lens in accordance with Aspect 7 of the present disclosure is configured, in any one of Aspects 3 to 6 above, such that the chalcogenide glass of which the second lens is made has the Abbe number that is defined in a wavelength band in a range of a wavelength of 8 $\mu$m to 12 $\mu$m and that is not less than 5% smaller than that of the chalcogenide glass of which the first lens is made, and the chalcogenide glass of which the fourth lens is made has the Abbe number that is defined in a wavelength band in a wavelength of 8 $\mu$m to 12 $\mu$m and that is not less than 5% smaller than that of the chalcogenide glass of which the third lens is made. The above configuration makes it possible to provide particularly favorable achromatic properties and to achieve a telephoto lens excellent in resolution.

An infrared imaging lens in accordance with Aspect 8 of the present disclosure is configured, in any one of Aspects 3 to 7 above, such that a focal length f1 of the first lens, a focal length f2 of the second lens, a focal length f3 of the third lens, and a focal length f4 of the fourth lens satisfy the following relational expressions:

$$1.1 \leq |f2/f1| \leq 2.0$$

$$1.1 \leq |f4/f3| \leq 2.0.$$

The above configuration makes it possible to provide particularly favorable achromatic properties and to achieve a telephoto lens excellent in resolution.

An infrared imaging lens in accordance with Aspect 9 of the present disclosure is configured, in any one of Aspects 3 to 8 above, such that an effective diameter of an image plane side-surface of the first lens serves as an aperture. The above configuration makes it possible to reduce the outer diameter and volume of the infrared imaging lens in comparison with a case where an aperture diaphragm is inserted between the lenses.

Aspect 10 of the present disclosure is an infrared imaging lens used in an infrared region including at least one wavelength in a range of 8 $\mu$m to 14 $\mu$m, the infrared imaging lens comprising a first group consisting of a plurality of lenses and a second group consisting of a plurality of lenses, the first group and the second group being disposed in order from an object side to an image plane side, the plurality of lenses constituting the first group and the plurality of lenses constituting the second group being each made of chalcogenide glass having a refractive index, measured at a wavelength of 10 $\mu$m, of 2.5 to 4.0, the first group and the second group each including the plurality of lenses each made of the chalcogenide glass that has a different Abbe number defined in a predetermined wavelength band in a range of 8 $\mu$m to 14 $\mu$m, the infrared imaging lens having a half angle of view of not more than 5°.

The above configuration makes it possible to achieve an infrared imaging lens that is a telephoto lens which has excellent resolution suitable for an image sensor having a pixel pitch substantially equivalent to the wavelength.

An infrared imaging lens in accordance with Aspect 11 of the present disclosure is configured, in any one of Aspects 1 to 10 above, such that the total system focal length fL and a focal length fG1 of the first group satisfy the following relational expression:

$$2.0 \leq fG1/fL \leq 3.0.$$

The above configuration makes it possible to achieve the infrared imaging lens 1 that has a small image height dependence of an MTF and that has practically excellent resolution properties.

An infrared imaging lens in accordance with Aspect 12 of the present disclosure is configured, in any one of Aspects 1 to 11 above, such that the total system focal length fL and a focal length fG2 of the second group satisfy the following relational expression:

$$0 < fG2/fL \leq 1.0.$$

The above configuration makes it possible to achieve the infrared imaging lens 1 that has a small image height dependence of an MTF and that has practically excellent resolution properties.

An infrared imaging lens in accordance with Aspect 13 of the present disclosure is configured, in any one of Aspects 1 to 12 above, such that the total system focal length is in a range of five times to ten times the diameter of the image circle. The above configuration makes it possible to achieve an infrared imaging lens which is a telephoto lens excellent in aberration properties and resolution.

An infrared imaging lens in accordance with Aspect 14 of the present disclosure is configured, in any one of Aspects 1 to 13 above, to have an f-number in a range of 0.9 to 1.1. The above configuration makes it possible to achieve an infrared imaging lens which is a telephoto lens excellent in aberration properties and resolution and which has a small f-number and thus is bright.

An infrared imaging lens in accordance with Aspect 15 of the present disclosure is configured, in any one of Aspects 1 to 14 above, such that the chalcogenide glass has an infrared absorption edge wavelength of not less than 18 $\mu$m at which the chalcogenide glass has a light transmittance of 20% measured at a thickness of 2 mm. The above configuration makes it possible to configure an infrared imaging lens which exhibits very little light absorption in a wavelength range of at least 8 $\mu$m to 14 $\mu$m.

An infrared imaging lens in accordance with Aspect 16 of the present invention is configured, in any one of Aspects 1 to 15 above, such that a temperature dependence of a refractive index of the chalcogenide glass at a wavelength of 10 $\mu$m is $200 \times 10^{-6}$ to $350 \times 10^{-6}$/K. The above configuration makes it possible to achieve an infrared imaging lens that is a telephoto lens which can keep particularly excellent resolution even when a temperature is changed.

The present invention is not limited to the embodiments, but can be altered by a skilled person in the art within the scope of the claims. The present invention also encompasses, in its technical scope, any embodiment derived by appropriately combining technical means disclosed herein. Further, it is possible to form a new technical feature by combining the technical means disclosed herein.

Reference Signs List

1  Infrared imaging lens
G1  First group
L1  First lens
L2  Second lens
G2  Second group
L3  Third lens
L4  Fourth lens
P  Parallel flat plate
S  Image plane

AP    Aperture

**Claims**

1.  An infrared imaging lens used in an infrared region including at least one wavelength in a range of 8 $\mu$m to 14 $\mu$m,

    the infrared imaging lens comprising a first group consisting of a plurality of lenses and a second group consisting of a plurality of lenses, the first group and the second group being disposed in order from an object side to an image plane side,
    the plurality of lenses constituting the first group and the plurality of lenses constituting the second group being each made of chalcogenide glass having a refractive index, measured at a wavelength of 10 $\mu$m, of 2.5 to 4.0, the first group and the second group each including the plurality of lenses each made of the chalcogenide glass that has a different Abbe number defined in a predetermined wavelength band in a range of 8 $\mu$m to 14 $\mu$m, the infrared imaging lens having a total system focal length not less than five times larger than a diameter of an image circle of the infrared imaging lens.

2.  The infrared imaging lens according to claim 1, wherein the first group and the second group each include a lens having a positive power and a lens having a negative power and are each configured to have a positive power.

3.  The infrared imaging lens according to claim 1, wherein

    the first group has a positive power and is constituted by, in order from the object side to the image plane side, a first lens having a positive power and a second lens having a negative power, and
    the second group has a positive power and is constituted by, in order from the object side to the image plane side, a third lens having a positive power and a fourth lens having a negative power.

4.  The infrared imaging lens according to claim 3, wherein the first lens, the second lens, the third lens, and the fourth lens are each a meniscus lens convex to the object side.

5.  The infrared imaging lens according to claim 3, wherein the first lens, the second lens, the third lens, and the fourth lens are each a spherical lens.

6.  The infrared imaging lens according to claim 3, wherein

    the refractive index and the Abbe number of the chalcogenide glass of which the second lens is made are smaller than those of the chalcogenide glass of which the first lens is made, and
    the refractive index and the Abbe number of the chalcogenide glass of which the fourth lens is made are smaller than those of the chalcogenide glass of which the third lens is made.

7.  The infrared imaging lens according to claim 6, wherein

    the chalcogenide glass of which the second lens is made has the Abbe number that is defined in a wavelength band in a range of a wavelength of 8 $\mu$m to 12 $\mu$m and that is not less than 5% smaller than that of the chalcogenide glass of which the first lens is made, and
    the chalcogenide glass of which the fourth lens is made has the Abbe number that is defined in a wavelength band in a wavelength of 8 $\mu$m to 12 $\mu$m and that is not less than 5% smaller than that of the chalcogenide glass of which the third lens is made.

8.  The infrared imaging lens according to claim 3, wherein a focal length f1 of the first lens, a focal length f2 of the second lens, a focal length f3 of the third lens, and a focal length f4 of the fourth lens satisfy the following relational expressions:

$$1.1 \leq |f2/f1| \leq 2.0$$

$$1.1 \leq |f4/f3| \leq 2.0.$$

9.  The infrared imaging lens according to claim 3, wherein an effective diameter of an image plane side-surface of the first lens serves as an aperture.

10. An infrared imaging lens used in an infrared region including at least one wavelength in a range of 8 $\mu$m to 14 $\mu$m,

the infrared imaging lens comprising a first group consisting of a plurality of lenses and a second group consisting of a plurality of lenses, the first group and the second group being disposed in order from an object side to an image plane side,
the plurality of lenses constituting the first group and the plurality of lenses constituting the second group being each made of chalcogenide glass having a refractive index, measured at a wavelength of 10 $\mu$m, of 2.5 to 4.0,
the first group and the second group each including the plurality of lenses each made of the chalcogenide glass that has a different Abbe number defined in a predetermined wavelength band in a range of 8 $\mu$m to 14 $\mu$m,
the infrared imaging lens having a half angle of view of not more than 5°.

11. The infrared imaging lens according to any one of claims 1 to 10, wherein the total system focal length fL and a focal length fG1 of the first group satisfy the following relational expression:

$$2.0 \leq fG1/fL \leq 3.0.$$

12. The infrared imaging lens according to claim 11, wherein the total system focal length fL and a focal length fG2 of the second group satisfy the following relational expression:

$$0 < fG2/fL \leq 1.0.$$

13. The infrared imaging lens according to any one of claims 1 to 10, wherein the total system focal length is in a range of five times to ten times the diameter of the image circle.

14. The infrared imaging lens according to any one of claims 1 to 10, the infrared imaging lens having an f-number in a range of 0.9 to 1.1.

15. The infrared imaging lens according to any one of claims 1 to 10, wherein the chalcogenide glass has an infrared absorption edge wavelength of not less than 18 $\mu$m at which the chalcogenide glass has a light transmittance of 20% measured at a thickness of 2 mm.

16. The infrared imaging lens according to any one of claims 1 to 10, wherein a temperature dependence of a refractive index of the chalcogenide glass at a wavelength of 10 $\mu$m is $200 \times 10^{-6}$ to $350 \times 10^{-6}$/K.

FIG. 1

FIG. 2

## FIG. 3

NUMERICAL EXAMPLE 1

COMATIC ABERRATION

FIG. 4

NUMERICAL EXAMPLE 1

## FIG. 5

NUMERICAL EXAMPLE 1

WAVELENGTH RANGE 8-14 $\mu$ m

SPATIAL FREQUENCY (cycles/mm)

TANGENTIAL
 IMAGE HEIGHT (mm)
------------ 0.00
——————— 2.44
—·—·—·— 3.26
- - - - - - 4.08

SAGITTAL
——————— 2.44
—·—·—·— 3.26
- - - - - - 4.08

## FIG. 6

NUMERICAL EXAMPLE 1

WAVELENGTH RANGE 8-14 $\mu$m

DIFFRACTION LIMIT

MTF

SPATIAL FREQUENCY(cycles/mm)

TANGENTIAL
  IMAGE HEIGHT(mm)
------------ 0.00
———————— 1.54
—·—·—·— 1.92
– – – – – 2.46

SAGITTAL
———————— 1.54
—·—·—·— 1.92
– – – – – 2.46

EP 4 641 281 A1

## FIG. 7

NUMERICAL EXAMPLE 1

WAVELENGTH RANGE 8-14 $\mu$m   SPATIAL FREQUENCY 15cycles/mm

TANGENTIAL
IMAGE HEIGHT(mm)
------- 0.00
——— 2.44
-·-·-· 3.26
— — — 4.08

SAGITTAL
——— 2.44
-··-··- 3.26
------- 4.08

FOCAL SHIFT(mm)

# FIG. 8

MTF

Best focal point=+0.243

**−40°C**

Best focal point=+0.132

**−10°C**

Best focal point=0.000

**20°C**

NUMERICAL EXAMPLE 1

| IMAGE HEIGHT (mm) | |
|---|---|
| TANGENTIAL | SAGITTAL |
| ------------ 0.00 | ———————— 2.44 |
| ———————— 2.44 | ·————·————· 3.26 |
| ·—·—·—·— 3.26 | ------------ 4.08 |
| - - - - - 4.08 | |

WAVELENGTH 10 μm   SPATIAL FREQUENCY 15cycles/mm
TEMPERATURE DEPENDENCE OF BEST FOCAL POINT dp'/dT≈−3.95 μm/°C

Best focal point=−0.125

**50°C**

Best focal point=−0.246

**80°C**

−0.30          0          0.30  −0.30          0          0.30

FOCAL SHIFT (mm)

EP 4 641 281 A1

## INTERNATIONAL SEARCH REPORT

| International application No. |
| --- |
| **PCT/JP2023/045406** |

**A.    CLASSIFICATION OF SUBJECT MATTER**

*G02B 13/14*(2006.01)i; *C03C 3/32*(2006.01)i; *G02B 1/02*(2006.01)i; *G02B 13/00*(2006.01)i; *G02B 13/02*(2006.01)i
FI:    G02B13/14; C03C3/32; G02B1/02; G02B13/00; G02B13/02

According to International Patent Classification (IPC) or to both national classification and IPC

**B.    FIELDS SEARCHED**

Minimum documentation searched (classification system followed by classification symbols)

G02B13/14; C03C3/32; G02B1/02; G02B13/00; G02B13/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2015-203850 A (TAMRON KK) 16 November 2015 (2015-11-16)<br>entire text, all drawings | 1-16 |
| A | WO 2021/015106 A1 (NIPPON ELECTRIC GLASS CO.) 28 January 2021 (2021-01-28)<br>entire text, all drawings | 1-16 |
| A | US 2014/0268315 A1 (SCHOTT CORPORATION) 18 September 2014 (2014-09-18)<br>entire text, all drawings | 1-16 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 March 2024** | **19 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/045406**

| Patent document cited in search report | | | Publication date (day/month/year) | Patent family member(s) | | | Publication date (day/month/year) |
|---|---|---|---|---|---|---|---|
| JP | 2015-203850 | A | 16 November 2015 | US entire text, all drawings CN | 2015/0301317 105045015 | A1 A | |
| WO | 2021/015106 | A1 | 28 January 2021 | US entire text, all drawings EP CN | 2022/0276467 4006611 113994248 | A1 A1 A | |
| US | 2014/0268315 | A1 | 18 September 2014 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019008271 A
- WO 2020105719 A1